# EUROPEAN PATENT SPECIFICATION

(11) **EP 1 846 546 B1**
(45) Date of publication and mention of the grant of the patent: **13.04.2011**
(21) Application number: 05773104.4
(22) Date of filing: 08.02.2005
(51) Int. Cl.: C12C 5/00, C12G 3/04, C12G 1/02

(54) **ALCOHOLIC BEVERAGE ENRICHED WITH 1H216O**
MIT 1H2160 ANGEREICHERTES ALKOHOLISCHES GETRÄNK
BOISSON ALCOOLISEE ENRICHIE DE 1H216O

(43) Date of publication of application: 24.10.2007
(73) Proprietor: Woodford Associates Limited, London W1B 3HH (GB); Soloviev, Sergey Pavlovich, Moscow 115432 (RU)
(72) Inventor: SOLOVIEV, Sergey Pavlovich, Moscow, 115432 (RU)
(74) Representative: Hayes, Adrian Chetwynd
(86) International application number: PCT/RU2005/000044
(87) International publication number: WO 2006/085784

(56) References cited:
- EP-A- 0 738 114
- WO-A-2005/070438
- DE-A1- 4 232 465
- US-A- 4 221 774
- DATABASE WPI Section Ch, Week 199719 Derwent Publications Ltd., London, GB; Class D16, AN 1997-211304 XP002351735 & RU 2 066 686 C1 (PRENATAL SAFETY STOCK CO) 20 September 1996 (1996-09-20)
- DATABASE WPI Section Ch, Week 200481 Derwent Publications Ltd., London, GB; Class D15, AN 2004-817938 XP002351684 & JP 2004 337843 A (SHOWA DENKO KK) 2 December 2004 (2004-12-02)
- DATABASE WPI Section Ch, Week 200478 Derwent Publications Ltd., London, GB; Class B04, AN 2004-789968 XP002351685 & JP 2004 315488 A (INT SCI KK) 11 November 2004 (2004-11-11)
- DATABASE EPODOC EUROPEAN PATENT OFFICE, THE HAGUE, NL; XP002351681 & UA 67 486 A (MAZUR OLEKSANDR DMYTROVYCH) 15 June 2004 (2004-06-15)

## Description

### Technical Field

The present invention relates to alcoholic beverage production. More specifically, this invention relates to production of alcoholic beverage enriched with ¹H₂¹⁶O by weight of water of alcoholic beverage composition, in other words alcoholic beverage with increased ¹H₂¹⁶O content in comparison with typical alcoholic beverage composition.

### Background of the Invention

The quality and purity of water as a component in the composition of alcoholic beverages are one of determinative factors for life quality and human health.

Water as a chemical agent is a substance consisting of water molecules. However there is no absolutely pure natural water. The natural water always contains a quantity of different suspension particles, chemical and biological admixtures. I.e. any natural water (including any drinking water) is a composition of water as a chemical agent and some other substances.

The purification of water is a vital necessity today. Water purification methods depend on subsequent use of water and can be different, such as filtration, distillation, reverse osmosis and so on. The traditional water purification methods are able to eliminate only admixtures from water and have no effect on water as a chemical agent. I.e. they do not change the ratio between isotope varieties of water molecules.

The molecule of water H₂O consists of two chemical elements - hydrogen H and oxygen O. Either of two elements also consists of several isotopes.

Hereinafter:
the term «hydrogen» (lettering: H) means a chemical element as a total of stable nonradioactive hydrogen isotope varieties;
the term «oxygen» (lettering: O) means a chemical element as a total of stable nonradioactive oxygen isotope varieties;
the natural hydrogen consists of stable nonradioactive isotopes:
   - protium (lettering ¹H);
   - deuterium (lettering ²H, historical symbol D, further can be used lettering ²H or equivalent lettering D).
the natural oxygen consists of three stable nonradioactive isotopes:
   - oxygen-16 (lettering ¹⁶O),
   - oxygen-17 (lettering ¹⁷O),
   - oxygen-18 (lettering ¹⁸O),
(the present invention concerns the said stable nonradioactive isotopes only);

Any water as a chemical agent is a composition of 9 isotope varieties of water molecule such as: ¹H₂¹⁶O, ¹H₂¹⁷O, ¹H₂¹⁸O, ¹H²H¹⁶O, ¹H²H¹⁷O, ¹H²H¹⁸O, ²H₂¹⁶O, ²H₂¹⁷O, ²H₂¹⁸O formed by stable isotopes of hydrogen - ¹H, ²H, and stable isotopes of oxygen - ¹⁶O, ¹⁷O, ¹⁸O. The other name for these isotope varieties of water molecule is isotopologues.

The term «isotopologue» is defined in accordance with IUPAC Compendium of Chemical Terminology 2nd Edition (1997) and refers to a molecular entity that differs only in isotopic composition (number of isotopic substitutions), e.g. ¹H₂¹⁶O, ¹H²H¹⁶O, ¹H₂¹⁸O. Herein and after the terms «isotope varieties of water molecule» and «isotopologue» are used as convertible terms.

The content of water isotopologues in Ocean Water is stated as the internationally accepted water standard VSMOW. In Ocean Water the level of ¹H₂¹⁶O molecules comprising light isotopes ¹H and ¹⁶O is 99.731% (Vienna Standard Mean Ocean Water, VSMOW), and about 0.2683% of the Ocean Water is formed by water molecules comprising heavy isotopes ²H, ¹⁷O, ¹⁸O (0.0372% ¹H₂¹⁷O, 0.199983% ¹H₂¹⁸O, 0.031069% ¹H²H¹⁶O, and etc.) (Rothman et al., J. Quant. Spectrosc. Radiat. Transfer, 1998, 60, 665. Rothman et al., J. Quant. Spectrosc. Radiat. Transfer, 2003, 82, p.9). The abundance of water isotopologues in natural water varies depending on Earth regions and climate conditions and is typically expressed as the deviation, δ, relative to the VSMOW standard. The natural water with maximum content of light water isotopologue ¹H₂¹⁶O was found in Antarctica (Standard Light Antarctic Precipitation, SLAP), wherein said δ-values of residual heavy isotopes are δ²H = -415.5‰, δ¹⁷O = -28.1‰, and δ¹⁸O = -53.9‰ that corresponds to the 99.757 % level of light water isotopologue ¹H₂¹⁶O (R. van Trigt, Laser Spectrometry for Stable Isotope Analysis of Water Biomedical and Paleoclimatological Applications, 2002, Groningen: University Library Groningen, p. 50).

Thus, natural water with the abundance of light water isotopologue ¹H₂¹⁶O more than 99.757% is not found in nature.

In natural water the residual concentration of the molecules, comprising ²H ¹⁷O ¹⁸O heavy isotopes, such as ¹H₂¹⁷O, ¹H₂¹⁸O, ¹H²H¹⁶O, ¹H²H¹⁷O, ¹H²H¹⁸O, ²H₂¹⁶O, ²H₂¹⁷O, ²H₂¹⁸O can amount to 2.97 g/l.

Since total levels of deuterium-comprising isotopologues in water is rather more 0.3 g/l (0.031%) (Rothman et al., J. Quant. Spectrosc. Radiat. Transfer, 1998, 60, 665. Rothman et al., J. Quant. Spectrosc. Radiat. Transfer, 2003, 82, p.9) a complete depletion of natural water of deuterium-comprising isotopologues provides water with the level of light water isotopologue ¹H₂1⁶O no more than 99.76%.

Thus, water with abundance of light water isotopologue ¹H₂¹⁶O more than 99.76% is unknown from the art.

Method and apparatus for production of the water with abundance of ¹H₂¹⁶O light water isotopologue more than 99.76% are also unknown from the art.

As mentioned above, in typical natural water the residual concentration of molecules, comprising ²H, ¹⁷O, ¹⁸O heavy isotopes can amount to 2.97 g/l by weight. In nature the less concentration of molecules, comprising ²H, ¹⁷O, ¹⁸O heavy isotopes, was found in Antarctica and corresponds to the 99.757 % level of light water isotopologue ¹H₂¹⁶O.

Heavy isotopes-comprising molecules in mammal organism can lead to a change of normal biochemical processes and to a decrease of functional resources of the organism.

There is the barest necessity to increase the content of light water molecules of ¹H₂¹⁶O in human organism, and to decrease the content of ¹H₂¹⁷O, ¹H₂¹⁸O, ¹H²H¹⁶O, ¹H²H¹⁷O, 1H²H¹⁸O, ²H₂¹⁶O, ²H₂¹⁷O, ²H₂¹⁸O molecules, that lead to improving of human wellness and life quality.

The content of isotope varieties of water molecule such as: ¹H₂¹⁶O, ¹H₂¹⁷O, ¹H₂¹⁸O, ¹H²H¹⁶O, ¹H²H¹⁷O, ¹H²H¹⁸O, ²H₂¹⁶O, ²H₂¹⁷O, ²H₂¹⁸O in human organism directly depend on the content of said isotope varieties of water molecule in drinking water and beverages, including alcoholic beverages, used by human.

An alcoholic beverage with abundance of light water isotopologue ¹H₂¹⁶O more than 99.76% unknown from the art.

Moreover, alcoholic liver disease is a health problem in the world. It has been estimated that about 90 to 100 % of heavy drinkers show evidence of fatty liver, about 10 to 35 % develop alcoholic hepatitis, and 8 to 20 % develop cirrhosis. Lelbach WK., Epidemiology of alcoholic liver disease. In: Popper H et al., eds. Progress in liver disease, vol.5, NY: Grune and Statton, 1976: 494-515.

Thus, there is a great need for a safe, effective ingredient for lowering ethanol toxicity in alcoholic beverages with little or no effect on consumer properties of the beverages. XP002351735 discloses means for reducing the toxicity of alcoholic beverages.

Unexpectedly, we discovered that alcohol in alcoholic composition comprising water with abundance of light water isotopologue ¹H₂¹⁶O more than 99.76% has considerably reduced toxic effect.

It is an object of the present invention to provide an alcoholic beverage comprising water with abundance of light water isotopologue ¹H₂¹⁶O more than 99.76%.

### Brief Description of the Drawings

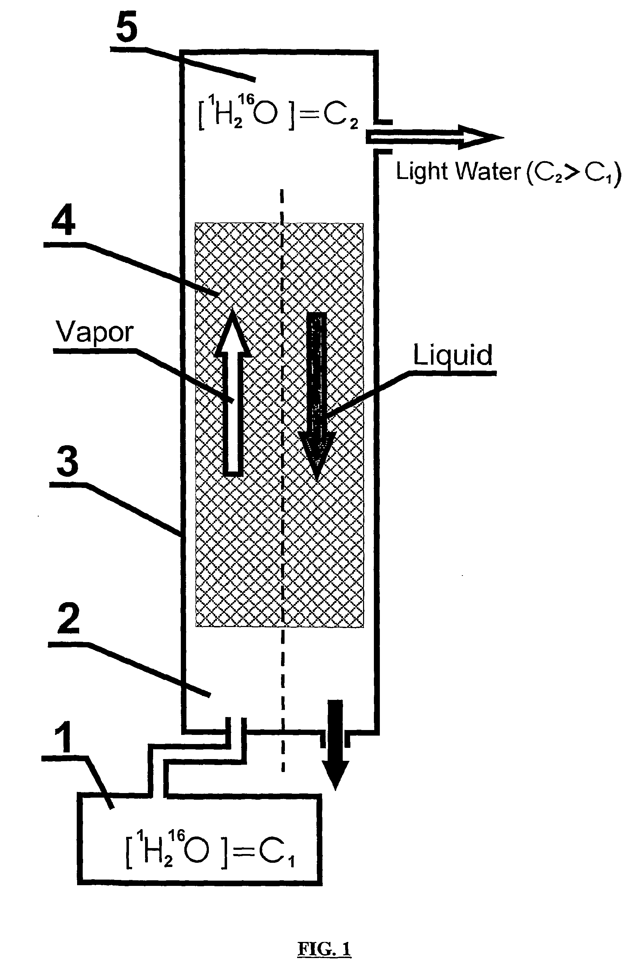

FIG.1 is a schematic side view of an apparatus for the production of the water comprising from 99.76% to 99.99% of ¹H₂¹⁶O by weight.

### Disclosure of Invention

The present invention provides an alcoholic beverage enriched with ¹H₂¹⁶O, wherein the content of ¹H₂¹⁶O is no less than 99.76% by weight of water of said alcoholic beverage, comprising:
A) a highly pure light water in an amount from about 20% to about 95 % by weight of said alcoholic beverage, wherein the highly pure light water is a composition comprising from 99.76% to 99.99% of ¹H₂¹⁶O and residual amounts of ¹H₂¹⁷O, ¹H₂¹⁸O, ¹H²H¹⁶O, ¹H²H ¹⁷O, ¹H²H¹⁸O, ²H₂¹⁶O, ²H₂¹⁷O, ²H₂¹⁸O up to 100% correspondingly;
B) a physiologically acceptable additive in an amount from 0 % to about 75 % by weight of said alcoholic beverage;and
C) an acceptable alcoholic component in an amount up to 100 % by weight of said alcoholic beverage.

Preferably, the present invention provides an alcoholic beverage enriched with ¹H₂¹⁶O, wherein the content of ¹H₂¹⁶O is no less than 99.80% by weight of water of said alcoholic beverage, comprising:
A) a highly pure light water in an amount from about 20% to about 95 % by weight of said alcoholic beverage, wherein the highly pure light water is a composition comprising from 99.80% to 99.99% of ¹H₂¹⁶O and residual amounts of ¹H¹⁷O, ¹H₂¹⁸O, ¹H²H¹⁶O, ¹H²H¹⁷O, ¹H²H¹⁸O, ²H₂¹⁶O, ²H₂¹⁷O ²H₂¹⁸O up to 100% correspondingly;
B) a physiologically acceptable additive in an amount from 0 % to about 75 % by weight of said alcoholic beverage; and
C) an acceptable alcoholic component in an amount up to 100 % by weight of said alcoholic beverage.

Herein and after the definitions, «water with abundance of light water isotopologue ¹H₂¹⁶O more than 99.76%», «water with increased content ¹H₂¹⁶O» and «water enriched with ¹H₂¹⁶O» are used as convertible terms.

Herein and after, the term "highly pure light water" refers to water comprising from 99.76% to 99.99% of the most light isotope variety of water molecules, lettering ¹H₂¹⁶O.

Herein and after the term «typical water» means any water with content of ¹H₂¹⁶O within the limits of VSMOW-SLAP standards, i.e. from 99.731% to 99.757 % by weight of water.

Further, the present invention provides said alcoholic beverage enriched with ¹H₂¹⁶O, wherein highly pure light water is selected from the group comprising drinking water, distilled water, deionized water, reverse osmosis water.

Further, the present invention provides said alcoholic beverage enriched with ¹H₂¹⁶O, wherein an acceptable alcoholic component is alcohol or aqueous-alcoholic composition.

Further, the present invention provides said alcoholic beverage enriched with ¹H₂¹⁶O, wherein a physiologically acceptable additive is at least one selected from the group comprising inorganic salt, mineral, nutrient, vitamin, sweetener, flavouring, extract, essence, colorant, food acid, bracer, technological additive, food component.

Further, the present invention provides said alcoholic beverage enriched with ¹H₂¹⁶O, wherein said alcoholic beverage is selected from the group consisting of vodka, whisky, brandy, nastoyka, balm, liqueur, tequila, rum, samogon, gin, Japanese sake wine, Chinese wine, fruit wine, wine, alcohol cocktail, alcoholic beverage for refreshment, and beer.

Further, the present invention provides said alcoholic beverage enriched with ¹H₂¹⁶O, wherein said alcoholic beverage is the composition with reduced ethanol toxicity.

The present invention is directed to alcoholic beverage compositions comprising:
(A) a first component, which is highly pure light water;
(B) a second component, which is a physiologically acceptable additive; and
(C) a third component, which is an acceptable alcoholic component.

### First component (A) - highly pure light water

According to the present invention it is possible to produce water enriched with ¹H₂¹⁶O in an amount more than 99.76 % and up to 99.99% by weight of water. Water can be purified not only of typical chemicals and admixtures, but also of molecules, such as: ¹H₂¹⁷O, ¹H₂¹⁸O, ¹H²H¹⁶O, ¹H²H¹⁷O, ¹H²H¹⁸O, ²H₂¹⁶O, ²H₂¹⁷O, ²H₂¹⁸O, which can amount up to 2.97 g/l and are a kind of admixtures concerning main component of water, which is ¹H₂¹⁶O. As a result, the water becomes isotope homogenous substance consisting of ¹H₂¹⁶O in an amount up to 99.99 %, in other words, light water. This light water is a pure water to a greater extent than any other purified water with typical isotope composition, it is highly pure light water. Thus, one can reach a qualitatively new and higher level of the water purity.

Thus, highly pure light water is a composition comprising from 99.76 % to 99.99% of ¹H₂¹⁶O and residual amounts of ¹H₂¹⁷O, ¹H₂¹⁸O, ¹H²H¹⁶O, ¹H²H¹⁷O, ¹H²H¹⁸O, ²H₂¹⁶O, ²H₂¹⁷O, ²H₂¹⁸O up to 100% correspondingly.

For practicing the invention we offer a method and apparatus for production of highly pure light water.

Highly pure light water comprising more than 99.76 % of light isotopologue ¹H₂¹⁶O is prepared by distillation of typical water with typical content ¹H₂¹⁶O with using the apparatus of FIG.1. It is prepared by methods providing simultaneous depletion from typical water of 8 isotope varieties of water molecules comprising heavy isotopes ²H, ¹⁷O, and ¹⁸O such as: ¹H₂¹⁷O, ¹H₂¹⁸O, ¹H²H¹⁶O, ¹H²H¹⁷O, ¹H²H¹⁸O, ²H₂¹⁶O, ²H₂¹⁷O, ²H₂¹⁸O.

The process of the distillation includes:
- evaporating natural water comprising [C₁] of light isotopologue ¹H₂¹⁶O in boiling (see FIG 1,1) to produce water vapor;
- supplying the water vapor to the bottom (2) of distillation column (3);
- carrying out vapor-liquid contact between a descending liquid and an ascending vapor mainly on the surface of the contact device (4) (e.g. structured or random packing) within the distillation column, simultaneously the liquid and the vapor flow in mutually opposite directions over the surface of the contact device along the main flow direction which is the direction of the column axis;
- condensing water vapor with concentration of light isotopologue ¹H₂¹⁶O [C₂] on condenser (5) installed on the top of the distillation column;
- collecting a part of condensate as condensed highly pure light water comprising the increased content (more than 99.76 %) of light isotopologue ¹H₂¹⁶O [C₂ > C₁].

After respective treatment one can get highly pure light water which is drinking water, distilled water, deionized water, reverse osmosis water, ultrapure water, etc. These types of water differ by concentration of chemical substances, but it always comprises more than 99.76% of light isotopologue ¹H₂¹⁶O.

Nonexclusive examples of manufacturing of drinking water enriched with ¹H₂¹⁶O include the mixing distilled highly pure light water with typical drinking water in certain ratios; the mixing in certain ratios distilled highly pure light water with mineral natural water with ascertained mineral composition; the addition to distilled highly pure light water of essential mineral components, such as inorganic salts and minerals, up to necessary level.

Nonexclusive examples of manufacturing of deionized drinking water enriched with ¹H₂¹⁶O include the deionization of distilled highly pure light water at 18 MOm.

There is a molecular spectroscopic method for direct determination of ¹H₂¹⁶O content in samples. (Rothman et al., J. Quant. Spectrosc. Radiat. Transfer, 1998, 60, 665. Rothman et al., J. Quant. Spectrosc. Radiat. Transfer, 2003, 82, p.).

Any types of highly pure light water with increased content of light isotopologue ¹H₂¹⁶O are used for manufacturing of light alcoholic beverage enriched with ¹H₂¹⁶O¹ in an amount no less than 99.76% by weight of water of alcoholic beverage.

In the present invention highly pure light water can amount from about 20% to about 95 % by weight of alcoholic beverage composition.

### Second component (B) - physiologically acceptable additive

Examples of physiologically acceptable additive include, but are not limited to, inorganic salt, mineral, nutrient, vitamin, sweetener, flavouring, extract, essence, colorant, food acids, technological additive, food component, etc. or mixture thereof.

Nonexclusive examples of inorganic salts, which can be used in the beverages of the present invention, include sodium chloride, sodium bicarbonate, calcium chloride, magnesium sulfate, etc. or mixture thereof.

Nonexclusive examples of minerals, which can be used in the beverages of the present invention, include boron, calcium, chromium, cobalt, copper, fluoride, germanium, iodine, iron, lithium, magnesium, manganese, molybdenum, phosphorus, potassium, selenium, silicon, sodium, sulfur, vanadium, zinc, etc. or mixture thereof.

Nonexclusive examples of nutrients, which can be used in the beverages of the present invention, include carbohydrates, protein, lipid, essential fatty acid, vitamin, amino acid and its derivation, etc. or mixture thereof.

The compositions of the present invention can contain an effective amount of one or more sweeteners, including carbohydrate sweeteners and natural and/or artificial no/low calorie sweeteners.

Nonexclusive examples of sweetener include natural sweeteners, such as sucrose, fructose-glucose - liquid sugar, purified honey, glycyrrhizin, stevioside, the protein sweetener thaumatin, the juice of Luo Han Guo; or artificial non-caloric sweeteners, such as aspartame, saccharin, cyclamates, acesulfame K, etc. or mixture thereof.

Any natural or synthetic flavor agent can be used in the present invention. For example, one or more botanical and/or fruit flavors may be utilized herein. As used herein, such flavors may be synthetic or natural flavors.

Nonexclusive examples of fruit flavourings include apple flavor, citrus flavor, grape flavor, raspberry flavor, cranberry flavor, cherry flavor, grapefruit flavor, peach flavors, apricot flavors, tea, peppermint, cardimom, cinnamon, jasmine, vanilla, coffee, etc. or mixture thereof. Typically the flavoring agents are conventionally available as concentrates or extracts or in the form of synthetically produced flavoring esters, alcohols, aldehydes, terpenes, sesquiterpenes, and the like.

Nonexclusive examples of herbal extracts, which can be used in the beverages of the present invention, include guarana extract, aloe vera extract, ginkgo extract, korean ginseng extract, etc. or mixture thereof.

Nonexclusive examples of essence, which can be used in the beverages of the present invention, include orange essence, blackcurrant essence, lemon essence, lime essence, cherry essence, cranberry essence, etc. or mixture thereof.

Nonexclusive examples of synthetic or natural coloring agent, which can be used in the beverages of the present invention, include artificial food dyes and conventional food or food colorants, such as caramel colorant, black currant extract, aronia extract, hibiscus extract, etc. or mixture thereof.

Nonexclusive examples of food acid, which can be used in the beverages of the present invention, include siccine acid, malic acid, tartaric acid, gluconic acid, citric acid, lactic acid, maleic acid, fumaric acid, ascorbic acid, phosphoric acid, etc. or mixture thereof.

Nonexclusive example of bracer include coffee, tea, kola nut, cacao pod, etc. or mixture thereof.

Nonexclusive examples of technological additives, which can be used in the beverages of the present invention, include preservative, emulsifier, acidulant, gelling agent, thickener, stabilizer, etc. or mixture thereof.

Food component used of the present invention as physiologically acceptable additive in alcoholic beverage composition means any food component usually used in ordinary alcoholic beverages (for example, liqueur) in forms, which are necessary for this. Nonexclusive examples of alcoholic beverage of the present invention comprising food components include liqueur, alcoholic cocktail, etc.

Nonexclusive examples of food component, which can be used in the beverages of the present invention, include milk, concentrated low-fat milk, dried milk, cream, chocolate, egg, cocoa, juice, etc. or mixture thereof.

All physiologically acceptable additives are used in forms, which are necessary for production one or another alcoholic beverage. Such components may be dispersed, solubilized, or otherwise mixed into the present alcoholic beverage compositions. Several ingredients may be dissolved in highly pure light water or alcohol, or alcohol-water mixtures. The solid ingredients may be dissolved in highly pure light water or in hot highly pure light water if required prior to addition to the other components.

In the present invention physiologically acceptable additive can amount from 0 % to about 75 % by weight of alcoholic beverage composition.

### Third component (C) - an acceptable alcoholic component

The alcoholic beverage enriched with ¹H₂¹⁶O in an amount no less than 99.76% by weight of water of alcoholic beverage of the present invention comprises highly pure light water and an acceptable alcoholic component, which are alcohol or aqueous- alcoholic composition.

In the present invention the alcoholic beverage enriched with ¹H₂¹⁶O in an amount no less than 99.76% by weight of water of alcoholic beverage can be defined as alcoholic beverage forms, including but not limited to, vodka, whisky, brandy, nastoyka, balm, liqueur, tequila, rum, samogon, gin, Japanese sake wine, Chinese wine, fruit wine, alcohol cocktail, alcoholic beverage for refreshment, and beer, etc.

Nonexclusive example of vodka enriched with ¹H₂¹⁶O is a composition comprises the highly pure light water up to 80% by weight in the aqueous-alcoholic base.

Nonexclusive example of brandy enriched with ¹H₂¹⁶O is a composition comprising the highly pure light water up to 80% by weight in the aqueous-alcoholic base.

Nonexclusive example of nastoyka enriched with ¹H₂¹⁶O is composition comprising the highly pure light water up to 80% by weight in the aqueous-alcoholic base.

Nonexclusive example of balm enriched with ¹H₂¹⁶O is a composition comprising the highly pure light water up to 80% by weight in the aqueous-alcoholic base.

Nonexclusive example of liqueur enriched with ¹H₂¹⁶O is a composition comprising the highly pure light water up to 80% by weight in the aqueous-alcoholic base.

Nonexclusive example of alcohol cocktail enriched with ¹H₂¹⁶O is a composition comprising the highly pure light water up to 90% by weight in the aqueous-alcoholic base.

Nonexclusive example of beer enriched with ¹H₂¹⁶O is a composition comprising the highly pure light water up to 95% by weight in the aqueous-alcoholic base.

In the present invention an alcoholic beverage enriched with ¹H₂¹⁶O in an amount no less than 99.76% by weight of water of alcoholic beverage can be prepared by direct mixing highly pure light water with an acceptable alcoholic component, which can be alcohol (ethanol) or composition of alcohol and physiologically acceptable additive.

Nonexclusive examples are vodka, lemon vodka, etc.

Also, an alcoholic beverage enriched with ¹H₂¹⁶O in an amount no less than 99.76% by weight of water of alcoholic beverage in the present invention can be prepared by usage of highly pure light water directly at any stage of alcoholic beverage production.

Nonexclusive example is beer, in that the light water can be added at the stage of wort production.

Water with typical content ¹H₂¹⁶O (from about 99.731% to about 99.757 % by weight of water) can be substituted for highly pure light water enriched with ¹H₂¹⁶O in an amount no less than 99.76% in any alcoholic beverage. Exept water, other components remain the same according to typical composition for conventional methods of the production of one or another alcoholic beverage.

Preferably, the alcoholic beverage of the invention is bottled, packed or canned and still or saturated with carbon dioxide of necessity.

Preservatives may or may not be needed in alcoholic compositions of the present invention. Techniques such as aseptic and/or clean-fill processing may be utilized to avoid preservatives.

Water is the essential component of all biological systems. The functions of water are not limited to the role of the medium where the biochemical processes and diffusion of the metabolites take place. Water takes direct part in chemical reactions, structurization and stabilization of the molecules of the biopolymers and permolecular systems that provides their conformational mobility, and also in the osmoregulation and the transport of nutrients.

As mentioned above, light and heavy water isotopologues have distinct properties in biological system. For example, heavy water isotopologues decrease the rate of biochemical reactions, disturb conformational mobility of the molecules of biopolymers (Chervenak et al. JACS, 1994, 116 (23): 10533-10539. Makhatadze et al., Nature Struct. Biol., 1995, 2 (10): 852-855. Connelly et al., PNAS, 1994, 91: 1964-1968. Cupane et al., Nucleic Acids Res. 1980, 8 (18): 4283-4303). Thus, heavy isotopes-comprising molecules in mammal organism decrease of functional resources of the organism.

As mention above, the content of isotope varieties of water molecule such as: ¹H₂¹⁶O, ¹H₂¹⁷O, ¹H₂¹⁸O , ¹H₂¹⁶O, ¹H₂¹⁷O, ¹H₂¹⁸O, ¹H₂¹⁶O, ¹H₂¹⁷O, ²H₂¹⁸O in human organism directly depends on the content of said isotope varieties of water molecule in drinking water and beverages, including alcoholic beverages, used by human. Thus, it is more preferably the taking of an alcoholic beverages enriched with ¹H₂¹⁶O prepared on the base of highly pure light water in accordance with present invention.

Furthermore, unexpectedly, we discovered that water enriched with ¹H₂¹⁶O in an amount no less than 99.76% is effective and safe ingredient for lowering ethanol toxicity in alcohol compositions. These conclusions are confirmed our experiments performed on mice (example Nº 2).

Thus, in the present invention alcoholic beverage enriched with ¹H₂¹⁶O comprises highly pure light water with content of ¹H₂¹⁶O from 99.76% to 99.99%, which is the effective ingredient for lowering ethanol toxicity of alcoholic compositions without decrease of the main consumer properties of alcoholic beverages. Moreover, alcoholic beverages enriched with ¹H₂¹⁶O in an amount no less than 99.76% by weight of water of alcoholic beverage are beverages with best quality, because they offer all advantages of light water.

Alcoholic beverages enriched with ¹H₂¹⁶O in an amount no less than 99.76% by weight of water of alcoholic beverage, which are obtained by the present invention, are a new product which has not been produced up to this time.

The following examples are presented to demonstrate the invention. The examples are illustrative only and are not intended to limit the scope of the invention in any way.

### Example 1

This example demonstrates the method for producing highly pure light water of the invention.

Light water comprising 99.99% of light isotopologue ¹H₂¹⁶O is prepared by distillation of natural water comprising 99.70% of light isotopologue ¹H₂¹⁶O with using the apparatus in FIG. 1 under temperature 60°C and pressure 0.2 bars. The process of the distillation includes:
- evaporating natural water comprising 99.70% [C₁] of light isotopologue ¹H₂¹⁶O in boiling (see Fig 1,1) to produce water vapor;
- supplying the water vapor to the bottom (2) of distillation column (3);
- carrying out vapor-liquid contact between a descending liquid and an ascending vapor mainly on the surface of the contact device (4) (e.g. structured or random packing) within the distillation column, simultaneously the liquid and the vapor flow in mutually opposite directions over the surface of the contact device along a main flow direction which is along a direction of the column axis;
- condensing water vapor with concentration of light isotopologue ¹H₂¹⁶O 99.99% [C₂] on condenser (5) installed on upper bound of the distillation column;
- and collecting a part of condensate as condensed highly pure light water comprising 99.99% of light isotopologue ¹H₂¹⁶O [C₂ > C₁] appropriate for producing alcoholic beverages enriched with ¹H₂¹⁶O.

### Example 2

This example demonstrates the lowering ethanol hepatotoxicity.

Materials. Water enriched with ¹H₂¹⁶O with content ¹H₂¹⁶O = 99.78% was used. Typical water with content ¹H₂¹⁶O = 99.74% was used as a control.

Procedure. Ethanol-induced hepatotoxicity was assayed in vitro test as described. Neuman MG et al., Biochem. Biophys. Res. Commun. 1993. 197(2): 932-41. Briefly, human hepatoma HepG2 cells were grown in presence of 75 mM ethanol for 24 hours in medium prepared on water enriched with ¹H₂¹⁶O or control water. The cell viability was assayed in the MTT test. Data are presented in Table 1 as cell viability mean ± SD (n=6) in fold increase of control.

**Table 1. Effect of water enriched with ¹H₂¹⁶O on ethanol hepatotoxicity.**

| Treatment | Cell viability, in fold increase of control |
|---|---|
| Control water | 1.00 ± 1.76 |
| High pure light water (99.78% of light isotopologue ¹H₂¹⁶O) | 1.24 ± 9.68* |

| | |
|---|---|
| *Differs significantly of control (p<0.001) | |

Water enriched with ¹H₂¹⁶O up to 99.78% increases cell viability and lows ethanol toxicity as compared with control water.

### Example 3

This example demonstrates the method for producing vodka enriched with ¹H₂¹⁶O.

| Ingredients: | %, Weight |
|---|---|
| Highly pure light drinking water enriched with ¹H₂¹⁶O, wherein the content of ¹H₂¹⁶O is 99.85 % by weight of water | 65 |
| Ethanol, 96 % | 35 |
| Light vodka | 100 |

The final content of ¹H₂¹⁶O in the water of the light alcoholic beverage amounts no less than 99.845 % under conditions, that typical water with the least content of ¹H₂¹⁶O 99.731% amounts about 4 % in total quantity of water into alcoholic beverage.

Vodka enriched with ¹H₂¹⁶O comprising the highly pure light water in the aqueous-alcoholic composition has reduced ethanol toxicity and consequently has better consumer properties.

### Example 4.

Alcoholic cocktail enriched with ¹H₂¹⁶O.

| Ingredients | Content, Weight, kg |
|---|---|
| Sweetener | 65 - 105 |
| Citric acid | 2.35 - 3.5 |
| Concentrated juice | 8.7 - 10.8 |
| Fruit flavouring | 0.4 - 0.8 |
| Exotic flavouring | 0.01 - 0.015 |
| Red colorant | 0.015 - 0.025 |
| Sodium benzoate | 0.14 - 0.20 |
| Ethyl rectificate alcohol | 52.6 - 90.62 |
| Carbon dioxide | 2.9 - 3.6 |
| Highly pure light drinking water enriched with ¹H₂¹⁶O, wherein the content of ¹H₂¹⁶O is 99.85 % by weight of water | Balance |
| Total | 1000 dm³ |

The final content of ¹H₂¹⁶O in the water of light alcoholic cocktail amounts no less than 99.826 % under the most exacting requirement, that quantity of typical water with the least content of ¹H₂¹⁶O 99.731 % amounts up to 20 % by weight of total beverage water.

The light alcoholic cocktail enriched with ¹H₂¹⁶O is prepared by conventional manner. The obtained light alcoholic beverage has savoury taste, aroma and all additional advantages of light water.

### Example 5

This example demonstrates the method for producing beer enriched with ¹H₂¹⁶O.

The beer enriched with ¹H₂¹⁶O is prepared by conventional manner including the steps of:
(1) preparing a composition including a malt, molasses and light water with content ¹H₂¹⁶O = 99.88% in an amount not less than 90 % by weight of the composition;
(2) boiling said composition to make a wort;
(3) adding a predetermined quantity of hops to said wort;
(4) adding a predetermined quantity of brewers' yeast to said wort;
(5) aerating said wort to secure yeast growth;
(6) pitching said wort with a yeast slurry to provide a cell count of about 80 to about 180 million yeast cells per ml;
(7) fermenting the pitched wort at a temperature of 3 to 10.degree. C. for 24 to 72 hours;
(8) removing the yeast from the fermented wort;
(9) filtering the resulting brew; and
(10) final fermenting the resulting brew in fermentation tank for at least 3 weeks.

The final content of ¹H₂¹⁶O in the total quantity of water into light beer composition amounts no less than 99.82 % under the most exacting requirement, that the total quantity of water of said beverage comprises up to 40 % typical water with the least content of ¹H₂¹⁶O 99.731%, which is received from solid and liquid beer ingredients, and suitable quantity (no less than 60 %) of light water with content of ¹H₂¹⁶O 99.88%.

The obtained beer enriched with ¹H₂¹⁶O comprising the light water and no less than 5-7 % of alcohol in the aqueous-alcoholic composition has reduced ethanol toxicity and consequently has better consumer properties.

### Example 6

This example demonstrates the method for producing sour cocoa liqueur enriched with ¹H₂¹⁶O.

| | Ingredients | Content, dm³ or kg |
|---|---|---|
| 1 | Cream (42% milk fat) | 59.8 dm³ |
| 2 | Milk | 85.9 dm³ |
| 3 | Cocoa butter | 12 kg |
| 4 | Highly pure light distilled water enriched with ¹H₂¹⁶O, wherein the content of ¹H₂¹⁶O is 99.85 % by weight of water | 2.5 dm³ |
| 5 | 96 % ethanol | 83.3 dm³ |
| 6 | Propylene glycol alginate | 6 kg |
| 7 | Sugar | 250 kg |
| 8 | Concentrated orange juice (65.degree. Brix) | 62 dm³ |
| 9 | Low-fat cocoa powder dissolved in highly pure light distilled water enriched with ¹H₂¹⁶O, wherein the content of ¹H₂¹⁶O is 99.85 % by weight of water of 70.degree | 23kg/200 dm³ |
| 10 | Highly pure light distilled water enriched with ¹H₂¹⁶O, wherein the content of ¹H₂¹⁶O is 99.85 % by weight of water | 320 dm³ |
| 11 | Total | 1000 dm³ |

To prepare 1000 dm³ of sour cocoa liqueur, the following procedure was followed:
59.8 dm³ of cream (42% milk fat) were mixed with 85.9 dm³ milk, 12 kg cocoa butter and 2.5 dm³ highly pure light distilled water (99.85 % of light isotopologue ¹H₂¹⁶O) This mixture was homogenized in a two-stage homogenizer (Alfa Laval) at 150/20 bar. Added to this dairy mix were, in succession, 83.3 dm³ 96 % ethanol, 6 kg propylene glycol alginate and 250 kg sugar, whereupon, after vigorous stirring with a fast-running mixing device, a stabilized alcohol-cream base was obtained. Added to this base was 62 dm³ concentrated orange juice (65.degree. Brix) and 23 kg low-fat cocoa powder dissolved in 200 dm³ highly pure light distilled water (99.85 % of light isotopologue ¹H₂¹⁶O) of 70.degree. C. Finally, 320 dm³ highly pure light distilled water (99.85 % of light isotopologue ¹H₂¹⁶O) were added. This suspension was heated to 70.degree. C and homogenized twice in a two-stage homogenizer at 150/20 bar. Between and after the homogenization steps, the product was cooled to 20.degree. C. After the final homogenization step, the beverage was aseptically bottled in 0.7-liter bottles.

Thus, all water which was used for production of this alcoholic beverage was the light water. It was added three times during producing process at different production stages.

The final content of ¹H₂¹⁶O in the water of the liqueur enriched with ¹H₂¹⁶O amounts no less than 99.79 % under the most exacting requirement, that typical water with the least content of ¹H₂¹⁶O 9.731 % amounts no less 50 % in total quantity of water into alcoholic beverage

The obtained light liqueur has all additional advantages of light water, including reduced ethanol toxicity in the alcoholic beverage composition.

## Claims

1. An alcoholic beverage enriched with ¹H₂¹⁶O, wherein the content of ¹H₂¹⁶O is no less than 99.76% by weight of water of said alcoholic beverage, comprising:
A) a highly pure light water in an amount from about 20% to about 95 % by weight of said alcoholic beverage, wherein the highly pure light water is a composition comprising from 99.76% to 99.99% of ¹H₂¹⁶O and residual amounts of ¹H₂¹⁶O, ¹H₂¹⁶O, ¹H²H¹⁶O, ¹H²H ¹⁷O, ¹H²H¹⁸O, ²H₂¹⁶O, ²H₂¹⁷O, ²H₂¹⁸O up to 100% correspondingly;
B) a physiologically acceptable additive in an amount from 0 % to about 75 % by weight of said alcoholic beverage; and
C) an acceptable alcoholic component in an amount up to 100 % by weight of said alcoholic beverage.

2. The alcoholic beverage of claim 1, wherein the content of ¹H₂¹⁶O is no less than 99.80% by weight of water of said alcoholic beverage, comprising:
A) a highly pure light water in an amount from about 20% to about 95 % by weight of said alcoholic beverage, wherein the highly pure light water is a composition comprising from 99.80% to 99.99% of ¹H₂¹⁶O and residual amounts of ¹H₂¹⁷O, ¹H₂¹⁸O, ¹H²H¹⁶O, ¹H²H¹⁷O, ¹H²H¹⁸O, ²H₂¹⁶O, ²H¹⁷O, ²H₂¹⁸O up to 100% correspondingly;
B) a physiologically acceptable additive in an amount from 0 % to about 75 % by weight of said alcoholic beverage; and
C) an acceptable alcoholic component in an amount up to 100 % by weight of said alcoholic beverage.

3. The alcoholic beverage of claims 1-2, wherein highly pure light water is selected from the group comprising drinking water, distilled water, deionized water, reverse osmosis water.

4. The alcoholic beverage of claims 1-2, wherein a physiologically acceptable additive is at least one selected from the group comprising inorganic salt, mineral, nutrient, vitamin, sweetener, flavouring, extract, essence, colorant, food acid, bracer, technological additive, food component.

5. The alcoholic beverage of claims 1-2, wherein an acceptable alcoholic component is alcohol or aqueous- alcoholic composition.

6. The alcoholic beverage of claims 1-2, wherein said alcoholic beverage is selected from the group consisting of vodka, whisky, brandy, nastoyka, balm, liqueur, tequila, rum, samogon, gin, Japanese sake wine, Chinese wine, fruit wine, wine, alcohol cocktail, alcoholic beverage for refreshment, and beer.

7. The alcoholic beverage of claims 1-2, wherein said alcoholic beverage is the composition with reduced ethanol toxicity.

## Patentansprüche

1. Alkoholisches Getränk, das mit ¹H₂¹⁶O angereichert ist, wobei der Gehalt an ¹H₂¹⁶O nicht weniger als 99,76 Gewichts-% an Wasser des alkoholischen Getränks beträgt, umfassend:
A) ein hochreines leichtes Wasser in einer Menge von etwa 20 Gewichts-% bis etwa 95 Gewichts-% des alkoholischen Getränks, wobei das hochreine leichte Wasser eine Zusammensetzung umfassend von 99,76% bis 99,99% an ¹H₂¹⁶O und Restmengen an ¹H₂¹⁷O, ¹H₂¹⁸O, ¹H²H¹⁶O, ¹H²H¹⁷O, ¹H²H¹⁸O, ¹H₂¹⁶O, ¹H₂¹⁷O, ²H₂¹⁸O bis zu 100% entsprechend ist;
B) einen physiologisch akzeptablen Zusatzstoff in einer Menge von 0 Gewichts-% bis etwa 75 Gewichts-% des alkoholischen Getränks; und
C) einen akzeptablen alkoholischen Bestandteil in einer Menge von bis zu 100 Gewichts-% des alkoholischen Getränks.

2. Alkoholisches Getränk nach Anspruch 1, wobei der Gehalt an ¹H₂¹⁶O nicht weniger als 99,80 Gewichts-% an Wasser des alkoholischen Getränks beträgt, umfassend:
A) ein hochreines leichtes Wasser in einer Menge von etwa 20 Gewichts-% bis etwa 95 Gewichts-% des alkoholischen Getränks, wobei das hochreine leichte Wasser eine Zusammensetzung umfassend von 99,80% bis 99,99% an ¹H₂¹⁶O und Restmengen an ¹H₂¹⁷O, ¹H₂¹⁸O, ¹H²H¹⁶O, ¹H²H¹⁷O, ¹H²H¹⁸O, ²H₂¹⁶O, ²H₂¹⁷O, ²H₂¹⁸O bis zu 100% entsprechend ist;
B) einen physiologisch akzeptablen Zusatzstoff in einer Menge von 0 Gewichts-% bis etwa 75 Gewichts-% des alkoholischen Getränks; und
C) einen akzeptablen alkoholischen Bestandteil in einer Menge von bis zu 100 Gewichts-% des alkoholischen Getränks.

3. Alkoholisches Getränk nach den Ansprüchen 1-2, wobei das hochreine leichte Wasser ausgewählt ist aus der Gruppe umfassend Trinkwasser, destilliertes Wasser, entionisiertes Wasser, Umkehrosmose-Wasser.

4. Alkoholisches Getränk nach den Ansprüchen 1-2, wobei ein physiologisch akzeptabler Zusatzstoff mindestens einer ausgewählt aus der Gruppe umfassend ein anorganisches Salz, ein Mineral, einen Nährstoff, ein Vitamin, einen Süßstoff, einen Aromastoff, einen Extrakt, eine Essenz, einen Farbstoff, eine Lebensmittelsäure, ein Stärkungsmittel ("bracer"), einen technologischen Zusatzstoff, einen Lebensmittelbestandteil ist.

5. Alkoholisches Getränk nach den Ansprüchen 1-2, wobei ein akzeptabler alkoholischer Bestandteil Alkohol oder eine wässrig-alkoholische Zusammensetzung ist.

6. Alkoholisches Getränk nach den Ansprüchen 1-2, wobei das alkoholische Getränk ausgewählt ist aus der Gruppe bestehend aus Wodka, Whisky, Brandy, Nastoyka, Balsam ("balm"), Likör, Tequila, Rum, Samogon, Gin, Japanischem Sake-Wein, Chinesischem Wein, Fruchtwein, Wein, Alkoholcocktail, einem alkoholischen Getränk zur Erfrischung und Bier.

7. Alkoholisches Getränk nach den Ansprüchen 1-2, wobei das alkoholische Getränk die Zusammensetzung mit reduzierter Ethanoltoxizität ist.

## Revendications

1. Boisson alcoolisée enrichie avec du ¹H₂¹⁶O, dans laquelle la teneur en ¹H₂¹⁶O n'est pas inférieure à 99,76 % en poids d'eau de ladite boisson alcoolisée, comprenant :
A) de l'eau légère de grande pureté en une quantité allant d'environ 20 % jusqu'à environ 95 % en poids de ladite boisson alcoolisée, où l'eau légère de grande pureté est une composition comprenant de 99,76 % jusqu'à 99,99 % de ¹H₂¹⁶O et des quantités résiduelles de ¹H₂¹⁷O, ¹H₂¹⁸O, ¹H²H¹⁶O, ¹H²H¹⁷O, ¹H²H¹⁸O, ¹H₂¹⁶O, ¹H₂¹⁷O, ¹H₂¹⁸O jusqu' à atteindre 100 % ;
B) un additif physiologiquement acceptable en une quantité allant de 0 % jusqu'à environ 75 % en poids de ladite boisson alcoolisée ; et
C) un composant alcoolique acceptable en une quantité allant jusqu'à 100 % en poids de ladite boisson alcoolisée.

2. Boisson alcoolisée de la revendication 1, dans laquelle la teneur en ¹H₂¹⁶O n'est pas inférieure à 99,80 % en poids d'eau de ladite boisson alcoolisée, comprenant :
A) de l'eau légère de grande pureté en une quantité allant d'environ 20 % à environ 95 % en poids de ladite boisson alcoolisée, où l'eau légère de grande pureté est une composition comprenant de 99,80 % jusqu'à 99,99 % de ¹H₂¹⁶O et de manière correspondante des quantités résiduelles de ¹H₂¹⁶O, ¹H₂¹⁸O, ¹H²H¹⁶O, ¹H₂H¹⁷O, ¹H²H¹⁸O, ¹H₂¹⁶O, ¹H₂¹⁷O, ¹H₂¹⁸O jusqu'à atteindre 100 % ;
B) un additif physiologiquement acceptable en une quantité allant de 0 % jusqu'à environ 75 % en poids de ladite boisson alcoolisée ; et
C) un composant alcoolique acceptable en une quantité allant jusqu'à 100 % en poids de ladite boisson alcoolisée.

3. Boisson alcoolisée des revendications 1 et 2, dans laquelle l'eau légère de grande pureté est choisie dans le groupe composé d'eau potable, d'eau distillée, d'eau déminéralisée, d'eau ayant subi une osmose inverse.

4. Boisson alcoolisée des revendications 1 et 2, dans laquelle un additif physiologiquement acceptable est au moins un additif choisi dans le groupe comprenant un sel inorganique, un minéral, un nutriment, une vitamine, un édulcorant, un agent aromatisant, un extrait, une huile essentielle, un colorant, un acide alimentaire, un stimulant, un additif technologique, un composant alimentaire.

5. Boisson alcoolisée des revendications 1 et 2, dans laquelle un composant alcoolique acceptable est un alcool ou une composition alcoolique aqueuse.

6. Boisson alcoolisée des revendications 1 et 2, dans laquelle ladite boisson alcoolisée est choisie dans le groupe constitué de vodka, whisky, brandy, nastoyka, mélisse, liqueur, tequila, rhum, samogon, gin, saké japonais, vin chinois, vin de fruit, vin, cocktail alcoolisé, boisson alcoolisée utilisée comme rafraîchissement et bière.

7. Boisson alcoolisée des revendications 1 et 2, dans laquelle ladite boisson alcoolisée est la composition dont la toxicité de l'éthanol est réduite.
